(19) Europäisches Patentamt / European Patent Office / Office européen des brevets

(11) **EP 4 328 207 A1**

(12) **EUROPEAN PATENT APPLICATION**

(43) Date of publication:
**28.02.2024  Bulletin 2024/09**

(21) Application number: **23188597.1**

(22) Date of filing: **31.07.2023**

(51) International Patent Classification (IPC):
**C04B 35/44** $^{(2006.01)}$

(52) Cooperative Patent Classification (CPC):
**C04B 35/44;** C04B 2235/3217; C04B 2235/3224;
C04B 2235/3225; C04B 2235/3227;
C04B 2235/3229; C04B 2235/3286;
C04B 2235/5409; C04B 2235/602; C04B 2235/604;
C04B 2235/785; C04B 2235/786; C04B 2235/85;
C04B 2235/9646

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.08.2022  JP 2022133298
20.07.2023  JP 2023118270**

(71) Applicant: **Nichia Corporation
Anan-shi, Tokushima 774-8601 (JP)**

(72) Inventors:
• **YAMAMOTO, Ryo
Anan-shi, Tokushima (JP)**
• **TAKETOMI, Shozo
Anan-shi, Tokushima (JP)**

(74) Representative: **Vossius & Partner
Patentanwälte Rechtsanwälte mbB
Siebertstraße 3
81675 München (DE)**

(54) **SINTERED BODY AND METHOD FOR PRODUCING SINTERED BODY**

(57)   A sintered body includes an aluminum oxide phase and crystal agglomerated particles containing a rare earth aluminate fluorescent material crystal phase, wherein the aluminum oxide phase is disposed around the crystal agglomerated particles. A method for producing a sintered body includes: providing a first mixture obtained by wet mixing raw materials and then drying; dry mixing the first mixture and aluminum oxide particles; molding a mixture obtained by dry mixing the first raw material mixture and the aluminum oxide particles; and calcining a molded body obtained by molding the mixture.

FIG. 5

**Description**

CROSS-REFERENCE TO RELATED PATENT APPLICATION

This application claims priority to Japanese Patent Application No. 2022-133298, filed on August 24, 2022, and Japanese Patent Application No. 2023-118270, filed on July 20 2023, the disclosures of which are hereby incorporated by reference in their entireties.

BACKGROUND

The present disclosure relates to a sintered body, and a method for producing such a sintered body.

There are known light emitting devices provided with a light emitting diode (LED) or a laser diode (LD) and a wavelength conversion member containing a fluorescent material that converts a wavelength of light emitted from the LED or LD. Such light emitting devices are used for applications such as on-vehicle lighting, general lighting, backlights for liquid crystal display devices, and light sources for projectors.

As a wavelength conversion member provided on a light emitting device, for example, Japanese Patent Publication No. 2017-197774 discloses a single-phase porous optoceramic material having a density in a specific range relative to the theoretical density.

In the case where the wavelength conversion member scatters light due to its porosity, the density of the wavelength conversion member decreases due to the porosity. As a result, the luminous flux decreases, and the light extraction efficiency tends to decrease.

Thus, the present disclosure has an object to provide a sintered body capable of improving luminous flux while maintaining high light extraction efficiency, and a method for producing such a sintered body.

SUMMARY

A first aspect of the present disclosure relates to a sintered body including crystal agglomerated particles containing a rare earth aluminate fluorescent material crystal phase, and an aluminum oxide phase, wherein the aluminum oxide phase is disposed around the crystal agglomerated particles.

A second aspect of the present disclosure relates to a method for producing a sintered body including: providing a first raw material mixture obtained by wet mixing raw materials and then drying; dry mixing the first raw material mixture and aluminum oxide particles; molding a mixture obtained by dry mixing the first raw material mixture and the aluminum oxide particles; and calcining a molded body obtained by molding the mixture.

According to the aspects of the present disclosure, a sintered body capable of improving luminous flux while maintaining high light extraction efficiency, and a method for producing such a sintered body, can be provided.

BRIEF DESCRIPTION OF THE DRAWINGS

FIG. 1 is a flowchart describing an example of a method for producing a sintered body.
FIG. 2 is a diagram illustrating a schematic configuration showing an exemplary light emitting device.
FIG. 3 is a plan view illustrating a schematic configuration showing an exemplary fluorescent material device containing a sintered body.
FIG. 4 is a lateral side view illustrating a schematic configuration of an exemplary fluorescent material device containing a sintered body.
FIG. 5 is a scanning electron microscope (SEM) micrograph of a sintered body according to Example 1.
FIG. 6 is an SEM micrograph of a sintered body according to Example 2.
FIG. 7 is an SEM micrograph of a sintered body according to Comparative Example 1.
FIG. 8 is an SEM micrograph of a sintered body according to Comparative Example 2.
FIG. 9 is an SEM micrograph of a sintered body according to Comparative Example 3.
FIG. 10 is an SEM micrograph of a sintered body according to Comparative Example 4.

DETAILED DESCRIPTION

The sintered body and the production method according to the present disclosure will be hereunder described on the basis of embodiments. The embodiments described below are exemplifications for embodying the technical idea of the present disclosure, and the present disclosure is not limited to the following sintered body and production method.

Standards according to Japanese Industrial Standard (JIS) Z8110 are applied to the relations between color names and chromaticity coordinates, and the relations between wavelength ranges of light and color names of monochromatic lights. In this specification, the "fluorescent material" is used in the same meaning as a "fluorescent phosphor".

The sintered body includes crystal agglomerated particles containing a rare earth aluminate fluorescent material crystal phase, and an aluminum oxide phase, wherein the aluminum oxide phase is disposed around the crystal agglomerated particles. In the present specification, the rare earth aluminate fluorescent material crystal phase may be referred to as "fluorescent material crystal phase". Also, the rare earth aluminate fluorescent material may be referred to as "fluorescent material". When the aluminum oxide phase is disposed around the crystal agglomerated particles containing the fluorescent material crystal phase, the heat generated by absorbing and emitting the excitation light incident on the sintered body is radiated by the aluminum oxide phase having a thermal conductivity higher than that of the rare earth aluminate fluorescent material crystal phase, and the decrease in luminous energy due to the heat can be suppressed, thereby increasing the luminous flux of light emitted from the sintered body. The thermal conductivity of a lutetium-aluminum garnet fluorescent material having a Ce-activated lutetium-containing yttrium-aluminum garnet structure is approximately 8 $Wm^{-1}\cdot K^{-1}$, and the thermal conductivity of an aluminum oxide is 30 $Wm^{-1}\cdot K^{-1}$.

The sintered body preferably includes two or more of the crystal agglomerated particles in one cross-sectional view, wherein the aluminum oxide phase is disposed between two or more of the crystal agglomerated particles. One cross-sectional view refers to viewing a surface or a cross section of a sintered body in a scanning electron microscope (SEM) micrograph measured using, for example, an SEM. When the aluminum oxide phase is disposed between two or more of the crystal agglomerated particles, the heat generated by absorbing the energy of the excitation light and emitting light is easily radiated by the aluminum oxide phase having a thermal conductivity higher than that of the fluorescent material crystal phase, and the decrease in luminous energy due to the heat can be suppressed, thereby emitting light having a high luminous flux.

When forming a sintered body using a raw material of the rare earth aluminate fluorescent material, excess aluminum oxide included in the composition of the rare earth aluminate fluorescent material may be released to form an aluminum oxide phase. The inclusion of excess aluminum oxide in the composition of the rare earth aluminate fluorescent material causes distortion of the crystal structure of the rare earth aluminate fluorescent material. When the crystal structure of the rare earth aluminate fluorescent material is distorted to shift the lattice points of the host crystal, the rare earth aluminate fluorescent material cannot absorb the energy of the excitation light, and the energy for light emission may be lost due to thermal vibration of the distorted crystal structure, resulting in a decrease in luminous flux. For example, Japanese Patent Publication No. 2019-218560 discloses a single-phase porous optoceramic material capable of suppressing crack formation in the ceramics by reducing the content of free $Al_2O_3$ to less than 2.5% by volume.

In the sintered body, the aluminum oxide phase disposed around the crystal agglomerated particles is not composed of aluminum oxide derived from free excess aluminum that is not incorporated in the composition of the fluorescent material, when aluminum oxide (hereinafter, also referred to as "first aluminum oxide") as a raw material for forming the rare earth aluminate fluorescent material crystal phase forms the rare earth aluminate fluorescent material crystal phase. By adding aluminum oxide (hereinafter, also referred to as "second aluminum oxide") having a size different from that of the first aluminum oxide, in addition to the first aluminum oxide as a raw material for forming the rare earth aluminate fluorescent material crystal phase, the aluminum oxide phase can be disposed around the crystal agglomerated particles. An amount of the aluminum oxide phase disposed around the crystal agglomerated particles is larger than the free excess aluminum oxide that is not incorporated in the composition of the rare earth aluminate fluorescent material. When the aluminum oxide phase is not an aluminum oxide phase composed of only aluminum oxide formed from the first aluminum oxide as a raw material for forming the rare earth aluminate fluorescent material crystal phase, but an aluminum oxide phase formed from the second aluminum oxide having a size different from that of the first aluminum oxide, the host crystal structure of the rare earth aluminate fluorescent material is not distorted, and the heat generated during light emission of the rare earth aluminate fluorescent material can be efficiently radiated, thereby increasing the luminous flux.

The sintered body preferably includes an aluminum oxide phase having a maximum length of 1.0 $\mu$m or more on the surface or the cross section of the sintered body. The first aluminum oxide (first aluminum oxide particles) as a raw material for forming the rare earth aluminate fluorescent material crystal phase preferably has a large BET specific surface area and a relatively small particle diameter so as to increase the reactivity with other raw materials. On the other hand, the second aluminum oxide (second aluminum oxide particles) forming the aluminum oxide phase disposed around the crystal agglomerated particles containing the fluorescent material crystal phase preferably has a small BET specific surface area and a relatively large particle diameter so as to react less with the raw material forming the fluorescent material crystal phase. When the sintered body includes an aluminum oxide phase having a maximum length of 1.0 $\mu$m or more on the surface or the cross section and the aluminum oxide phase is disposed around the crystal agglomerated particles, it can be presumed that the aluminum oxide phase is not formed solely from the excess first aluminum oxide that is not included in the composition of the fluorescent material crystal phase, but that the aluminum oxide phase derived from the second aluminum oxide having a size different from that of the first aluminum oxide is formed. In the present specification, the distance between the two most distant points on the outline of the aluminum oxide phase or the crystal agglomerated particles on the surface or the cross section of the sintered body to be measured is defined as the long diameter of the aluminum oxide phase or the crystal agglomerated particles, and the largest value among the long diameters of the aluminum oxide phase or the crystal agglomerated particles on the surface or the cross section of the sintered body to be measured is defined as the maximum length. In the sintered body, the maximum length of the aluminum oxide phase on the surface or the cross section may be 3.0 $\mu$m or less, may be 2.5 $\mu$m or less, and may be 2.0 $\mu$m or less.

The sintered body preferably includes an aluminum oxide phase on the surface or the cross section of the sintered body in a range of 2.5 area% or more and 10.0 area% or less relative to 100 area% of the surface or the cross section. When the aluminum oxide phase is disposed around the crystal agglomerated particles in the sintered body and the sintered body includes the aluminum oxide phase in the range of 2.5 area% or more and 10.0 area% or less relative to 100 area% of the surface or the cross section, the heat generated when the fluorescent material crystal phase absorbs the energy of the excitation light and emits light can be efficiently radiated by the aluminum oxide phase having a thermal conductivity higher than that of the fluorescent material crystal phase, thereby increasing the luminous flux. On the surface or the cross section of the sintered body, the aluminum oxide phase may be included in 3.0 area% or more, may be included in 4.0 area% or more, and may be included in 4.5 area% or more; and may be included in 9.5 area% or less, may be included in 9.0 area% or less, and may be included in 8.5 area% or less, relative to 100 area% of the surface or the cross section. In the sintered body, the area ratio of the aluminum oxide phase relative to 100 area% of the surface or the cross section of the sintered body can be determined from a scanning electron microscope (SEM) micrograph measured using an SEM.

The sintered body preferably includes crystal agglomerated particles having a maximum length in a range of 10.0 $\mu$m or more and 150.0 $\mu$m or less on the surface or the cross section of the sintered body. The maximum length of the crystal agglomerated particles on the surface or the cross section of the sintered body is more preferably in a range of 60.0 $\mu$m or more and 130.0 $\mu$m or less, and even more preferably in a range of 70.0 $\mu$m or more and 120.0 $\mu$m or less. When the maximum length of the crystal agglomerated particles on the surface or the cross section of the sintered body falls within the range of 10.0 $\mu$m or more and 150.0 pm or less, the excitation light incident on the sintered body can be easily absorbed on the fluorescent material crystal phase contained in the crystal agglomerated particles for wavelength conversion, thereby suppressing a decrease in luminous flux of light emitted from the sintered body and allowing the light maintaining a high luminous flux to be emitted from the sintered body. Also, when the maximum length of the crystal agglomerated particles on the surface or the cross section of the sintered body falls within the range of 10.0 $\mu$m or more and 150.0 $\mu$m or less, the crystal agglomerated particles are larger than the aluminum oxide phase, and the aluminum oxide phase can be easily disposed around the crystal agglomerated particles. When the crystal agglomerated particles are larger than the rare earth aluminate crystal phase, the aluminum oxide phase can be easily disposed between two or more of the crystal agglomerated particles.

The measurement range area on the surface or the cross section of the sintered body is preferably an area of 48,387 $\mu$m$^2$ in an SEM micrograph measured using an SEM. With the measurement range area on the surface or the cross section of the sintered body, the long diameter and maximum length of the aluminum oxide phase, the area ratio of the aluminum oxide phase relative to 100 area% of the measurement range area, and the long diameter and maximum length of the crystal agglomerated particles can be measured. When the measurement range area on the surface or the cross section of the sintered body is an area of 48,387 $\mu$m$^2$ in the SEM micrograph, the long diameter, maximum length, and area ratio of the aluminum oxide phase, as well as the long diameter and maximum length of the crystal agglomerated particles, can be accurately measured.

In the sintered body, the aluminum oxide phase preferably has a volume ratio in a range of 2.5% by volume or more and 10.0% by volume or less relative to 100% by volume of the total of the crystal agglomerated particles and the aluminum oxide phase. The volume ratio of the aluminum oxide phase may be in a range of 3.0% by volume or more and 9.5% by volume or less, may be in a range of 4.0% by volume or more and 9.0% by volume or less, and may be in a range of 4.5% by volume or more and 8.5% by volume or less, relative to 100% by volume of the total of the crystal agglomerated particles and the aluminum oxide phase. When the volume ratio of the aluminum oxide phase falls within the range of 2.5% by volume or more and 10.0% by volume or less in the sintered body, the aluminum oxide phase is easily disposed around the crystal agglomerated particles, and is easily disposed between two or more of the crystal agglomerated particles. In the sintered body, the volume ratio of the aluminum oxide phase relative to 100% by volume of the total of the crystal agglomerated particles and the aluminum oxide phase can be determined from an SEM micrograph measured using an SEM, as in the area ratio of the aluminum oxide phase relative to 100 area% on the surface or the cross section of the sintered body. This is because the aluminum oxide phase observed on the surface or the cross section of the sintered body can be presumed to be present in the thickness direction.

The rare earth aluminate fluorescent material crystal phase preferably contains at least one element selected from the group consisting of Y, La, Lu, Gd, and Tb. When the rare earth aluminate fluorescent material crystal phase contains at least one element selected from the group consisting of Y, La, Lu, Gd, and Tb, a rare earth aluminate fluorescent material crystal phase having a composition that absorbs incident excitation light and converts it into wavelength-converted light having a desired color can be easily obtained.

The rare earth aluminate fluorescent material crystal phase preferably has a composition included in a compositional formula represented by the following formula (I). When the rare earth aluminate fluorescent material crystal phase has a composition represented by the following formula (I), the rare earth aluminate fluorescent material crystal phase can absorb excitation light and emit a wavelength-converted light having a desired color.

$$(R^1_{1-n}Ce_n)_3(Al_{1-m}M^1_m)_{5k}O_{12} \qquad (I)$$

wherein $R^1$ represents at least one element selected from the group consisting of Y, La, Lu, Gd, and Tb; $M^1$ represents at least one element selected from the group consisting of Ga and Sc; and m, n, and k respectively satisfy $0 \leq m \leq 0.02$, $0.001 \leq n \leq 0.017$, and $0.95 \leq k \leq 1.10$.

In the composition represented by the formula (I), $R^1$ may include two or more rare earth elements. Ce is an activation element in the rare earth aluminate fluorescent material crystal phase, and the product of the parameter n and 3 represents a molar ratio of Ce in the composition represented by the formula (I). The parameter n is more preferably in a range of 0.002 or more and 0.016 or less ($0.002 \leq n \leq 0.016$), and even more preferably in a range of 0.003 or more and 0.015 or less ($0.003 \leq n \leq 0.015$). In the composition represented by the formula (I), the product of the parameter m, 5, and the parameter k represents a molar ratio of the element $M^1$. The element $M^1$ may not be included in the composition represented by the formula (I), that is, the parameter m may be zero (0). In the composition represented by the formula (I), the parameter m may be in a range of 0.00001 or more and 0.02 or less ($0.00001 \leq m \leq 0.02$), and may be in a range of 0.00005 or more and 0.018 or less ($0.00005 \leq m \leq 0.018$), so as to convert the wavelength for a desired color. In the composition represented by the formula (I), the product of the parameter k and 5 represents a total molar ratio of Al and the element $M^1$. The parameter k is more preferably in a range of 0.96 or more and 1.09 or less ($0.96 \leq k \leq 1.09$), and even more preferably in a range of 0.97 or more and 1.08 or less ($0.97 \leq k \leq 1.08$).

The sintered body preferably has a relative density of 90% or more. The relative density thereof is more preferably 93% or more, and even more preferably 95% or more; and may be 100%, and may be 99% or less. When the relative density of the sintered body falls within the range of 90% or more and 100% or less, the heat generated when the excitation light incident on the sintered body is wavelength-converted by the fluorescent material crystal phase can be efficiently radiated from the aluminum oxide phase disposed around the fluorescent material crystal phase, thereby emitting wavelength-converted light having a high luminous flux.

The relative density of the sintered body can be calculated from an apparent density of the sintered body and a true density of the sintered body according to the following formula (1).

$$\text{Relative density (\%) of sintered body}$$
$$= (\text{Apparent density of sintered body} \div \text{True density of sintered body}) \times 100 \qquad (1)$$

The apparent density of the sintered body is a value obtained by dividing the mass of the sintered body by the volume of the sintered body, and can be calculated according to the following formula (2). The true density of the sintered body can be calculated according to the following formula (3) by using a true density of a fluorescent material and a true density of an aluminum oxide (aluminum oxide particles). The void ratio of the sintered body is the balance obtained by subtracting the relative density of the sintered body from 100%.

$$\text{Apparent density of sintered body}$$
$$= \text{Mass (g) of sintered body} \div \text{Volume (cm}^3\text{) of sintered body}$$
$$(\text{Archimedes' method}) \qquad (2)$$

$$\text{True density of sintered body} = \frac{P1_d \times P2_d \times (P1_m + P2_m)}{(P2_d \times P1_m) + (P1_d \times P2_m)} \qquad (3)$$

Mass ratio (% by mass) of rare earth aluminate fluorescent material: $P1_m$
True density (g/cm$^3$) of rare earth aluminate fluorescent material: $P1_d$
Mass ratio (% by mass) of aluminum oxide particles: $P2_m$
True density (g/cm$^3$) of aluminum oxide particles: $P2_d$
$P1_m + P2_m = 100\%$ by mass

The sintered body can be used as a reflection-type wavelength conversion member in which the incident surface (first main surface) on which the excitation light is incident and the emitting surface (first main surface) from which the wavelength-converted light is emitted are the same. When the sintered body is used as a reflection-type wavelength conversion member, the thickness thereof is not limited, and when the sintered body is a plate-shaped body, the plate thickness is preferably in a range of 90 $\mu$m or more and 250 $\mu$m or less, and more preferably in a range of 100 $\mu$m or more and 240 $\mu$m or less, so as to improve the light extraction efficiency.

When the sintered body has a plate shape and the incident surface on which the excitation light is incident and the emitting surface from which the wavelength-converted light is emitted are the same, the light diameter of the emitting light is preferably less than 102%, and more preferably 101% or less, relative to 100% of the light diameter of the incident light. When the light diameter of the light emitted from the same surface as the incident surface is less than 102% relative to 100% of the light diameter of the incident light, the scattering of the emitting light is kept suppressed and the light emitted from the sintered body can be converged to a desired position. The light diameter of the incident light that is incident on one surface of the sintered body is a light diameter of light emitted from a light source. The light diameter of the incident light can be measured using, for example, a color luminance meter. The light dimeter of the incident light is preferably in a range of 0.1 mm or more and 5 mm or less, and more preferably in a range of 0.5 mm or more and 4 mm or less. The light diameter of the light emitted from the same surface as that on which the light is incident on the sintered body can be determined as follows: the light emission luminance of the light emitted from the sintered body is measured using a color luminance meter; a position exhibiting the maximum luminance in the obtained light emission spectrum is defined as a center (measuring center); the distances (mm) of two positions in the light emission spectrum where the luminance is 10/100 of the maximum luminance (hereinafter, may be referred to as "10/100 luminance") from the measuring center are measured in terms of absolute values; and the sum of the absolute values of the distances (mm) of the two positions in the light emission spectrum where the luminance is 10/100 of the maximum luminance from the measuring center is determined as the light diameter of the emitting light.

A method for producing a sintered body includes: providing a first raw material mixture obtained by wet mixing raw materials and then drying; dry mixing the first raw material mixture and aluminum oxide particles; molding a mixture obtained by dry mixing the first raw material mixture and the aluminum oxide particles; and calcining a molded body obtained by molding the mixture.

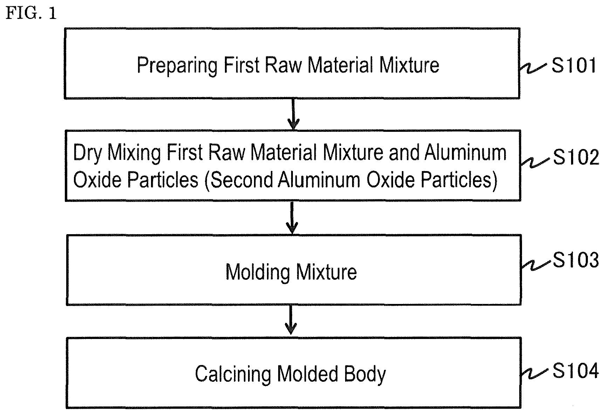

FIG. 1 is a flowchart describing an exemplary method for producing a sintered body. The method for producing a sintered body will be described with reference to FIG. 1. The method for producing a sintered body includes providing a first raw material mixture S101, dry mixing the first raw material mixture and aluminum oxide particles S102, molding the mixture S103, and calcining the molded body S104.

The first raw material mixture is preferably provided to contain first oxide particles containing at least one rare earth element $R^1$ selected from the group consisting of Y, La, Lu, Gd, and Tb, second oxide particles containing Ce, third oxide particles containing Al, optionally fourth oxide particles containing at least one element $M^1$ selected from the group consisting of Ga and Sc, and optionally rare earth aluminate fluorescent material particles.

Specific examples of the first oxide particles include yttrium oxide particles, lanthanum oxide particles, lutetium oxide particles, gadolinium oxide particles, and terbium oxide particles. Specific examples of the second oxide particles include cerium oxide particles. Specific examples of the third oxide particles include aluminum oxide particles. Specific examples of the fourth oxide particles include gallium oxide particles and scandium oxide particles.

When the third oxide particles containing Al are aluminum oxide particles, the aluminum oxide particles that are the third oxide particles containing Al contained in the first raw material mixture are also referred to as "first aluminum oxide particles". The third oxide particles (first aluminum oxide particles) preferably have a larger BET specific surface area and a smaller particle diameter than those of the aluminum oxide particles (hereinafter, also referred to as "second aluminum oxide particles") to be dry-mixed with the first raw material mixture described below. When the first aluminum oxide particles, which are the third oxide particles contained in the first raw material mixture, have a larger BET specific surface area and a smaller particle diameter than those of the second aluminum oxide particles, the reactivity with the oxide particles contained in the first raw material mixture is increased, the rare earth aluminate fluorescent material crystal phase preferably having a composition represented by the formula (I) is easily formed, and distortion of the crystal structure of the rare earth aluminate fluorescent material crystal phase is suppressed to prevent the lattice points of the host crystal from being shifted, so that the energy of the excitation light can be efficiently absorbed to emit wavelength-converted light having a high luminous flux from the fluorescent material crystal phase. The third oxide particles containing Al, such as the first aluminum oxide particles, preferably have a BET specific surface area in a range of more than 10.0 $m^2/g$ and 15.0 $m^2/g$ or less. When the BET specific surface area of the third oxide particles containing Al falls within the range of more than 10.0 $m^2/g$ and 15.0 $m^2/g$ or less, the reactivity with the oxide particles contained in the first raw material mixture can be increased, thereby forming a rare earth aluminate fluorescent material crystal phase having a desired composition. The BET specific surface area of the third oxide particles containing Al may be in a range of 10.5 $m^2/g$ or more and 14.5 $m^2/g$ or less, may be in a range of 11.0 $m^2/g$ or more and 14.0 $m^2/g$ or less, and may be in a range of 11.5 $m^2/g$ or more and 13.5 $m^2/g$ or less.

The oxide particles contained in the first raw material mixture are preferably blended so as to have molar ratios in the composition represented by the formula (I).

When the oxide particles contained in the first raw material mixture are blended so as to have, for example, molar ratios in the composition represented by the formula (I), the rare earth aluminate fluorescent material particles contained in the first raw material mixture preferably have the composition represented by the formula (I).

When the first raw material mixture contains rare earth aluminate fluorescent material particles, the mass ratio of the rare earth aluminate fluorescent material particles is preferably in a range of 10% by mass or more and 90% by mass or less, more preferably in a range of 12% by mass or more and 80% by mass or less, and even more preferably in a range of 15% by mass or more and 70% by mass or less, relative to 100% by mass of the total of the first oxide particles, the second oxide particles, the third oxide particles, and optionally the fourth oxide particles. When the first raw material mixture contains rare earth aluminate fluorescent material particles within the range of the mass ratio, the aluminum oxide particles can be disposed around the crystal agglomerated particles containing a rare earth aluminate fluorescent material crystal phase, and a sintered body including crystal agglomerated particles having a desired size may be obtained. The rare earth aluminate fluorescent material particles contained in the first raw material mixture may be rare earth aluminate fluorescent material particles formed by a co-precipitation method. The rare earth aluminate fluorescent material particles formed by a co-precipitation method have a large specific surface area and easily form crystal agglomerated particles containing a rare earth aluminate fluorescent material crystal phase.

In the first raw material mixture, raw materials are preferably wet-mixed. In the first raw material mixture, first to fourth oxide particles and optionally rare earth aluminate fluorescent material particles are wet-mixed to be uniformly dispersed in a liquid, thereby forming crystal agglomerated particles containing a homogeneous rare earth aluminate fluorescent material crystal phase. Examples of the liquid used in wet mixing in the first raw material mixture include deionized water, water, and ethanol. The amount of the liquid used in wet mixing in the first raw material mixture is preferably in a range of 10 parts by mass or more and 200 parts by mass or less, and may be in a range of 40 parts by mass or more and 150 parts by mass, relative to 100 parts by mass of the first raw material mixture.

The first raw material mixture obtained by wet mixing may contain a dispersant. Examples of the dispersant used include organic dispersants, such as a cationic dispersant, an anionic dispersant, and a nonionic dispersant. When a dispersant is added to the first raw material mixture, the amount of the dispersant is preferably an amount by which the dispersant volatilizes by thermal degreasing or calcining, and is preferably 10% by mass or less, may be 5% by mass or less, and may be 3% by mass or less, relative to 100% by mass of the first raw material mixture.

The first raw material mixture can be obtained by drying after wet mixing. The drying temperature may be in a range of 50°C or higher and 150°C or lower, and the drying time may be in a range of 1 hour or more and 20 hours or less. By performing wet mixing and drying, a first raw material mixture can be obtained in which the raw materials of the first to fourth oxides and optionally the rare earth aluminate fluorescent material particles are uniformly mixed.

The aluminum oxide particles (second aluminum oxide particles) to be dry-mixed with the first raw material mixture preferably have a BET specific surface area smaller than that of the third oxide particles containing Al contained in the first raw material mixture. When the BET specific surface area of the second aluminum oxide particles is smaller than that of the third oxide particles containing Al, the second aluminum oxide particles are less likely to react with the oxide particles in the first raw material mixture, thereby easily forming an aluminum oxide phase formed from the second aluminum oxide particles around the crystal agglomerated particles formed from the first raw material mixture.

The aluminum oxide particles (second aluminum oxide particles) to be dry-mixed with the first raw material mixture preferably have a BET specific surface area in a range of 1.0 m$^2$/g or more and 10.0 m$^2$/g or less. When the BET specific surface area of the aluminum oxide particles (second aluminum oxide particles) to be dry-mixed with the first raw material mixture falls within the range of 1.0 m$^2$/g or more and 10.0 m$^2$/g or less, the second aluminum oxide particles are less likely to react with the oxide particles in the first raw material mixture since the BET specific surface area is small, thereby easily forming an aluminum oxide phase (that is formed from the second aluminum oxide particles having a size that facilitates radiating the heat generated by the fluorescent material crystal phase) around the crystal agglomerated particles formed from the first raw material mixture. The BET specific surface area of the aluminum oxide particles (second aluminum oxide particles) to be dry-mixed with the first raw material mixture may be in a range of 1.5 m$^2$/g or more and 9.0 m$^2$/g or less, may be in a range of 2.0 m$^2$/g or more and 8.0 m$^2$/g or less, and may be in a range of 3.0 m$^2$/g or more and 7.0 m$^2$/g or less.

The method for producing a sintered body includes dry mixing aluminum oxide particles (second aluminum oxide particles) and a first raw material mixture obtained by wet mixing raw materials and then drying. Dry mixing is preferably performed for 10 minutes or more and 2 hours or less using, for example, a ball mill. After dry mixing, the mixture may be passed through a sieve with an aperture of 350 μm or less. When the first raw material mixture and the aluminum oxide particles are dry-mixed, they are mixed less uniformly than when they are wet-mixed. The dry-mixed first raw material mixture and the aluminum oxide particles, which are not as uniformly mixed as when wet-mixed, can be calcined to form crystal agglomerated particles containing a rare earth aluminate fluorescent material crystal phase from the first raw material mixture, thereby easily obtaining a sintered body including the aluminum oxide phase disposed around the crystal agglomerated particles. The mixture containing the first raw material mixture and the aluminum oxide particles may be dry powder mixed, in which a portion of the mixture is pulverized.

The aluminum oxide particles (second aluminum oxide particles) are preferably contained in a range of 2.5% by volume or more and 10.0% by volume or less relative to 100% by volume of the total amount of the first raw material mixture and the aluminum oxide particles. The use of a mixture obtained by dry mixing the first raw material mixture and the aluminum oxide particles such that the volume ratio of the aluminum oxide particles is in the range of 2.5% by volume or more and 10.0% by volume or less relative to 100% by volume of the total amount of the first raw material mixture and the aluminum oxide particles can obtain a sintered body containing an aluminum oxide phase in a range of 2.5% by volume or more and 10.0% by volume or less relative to 100% by volume of the total of the crystal agglomerated particles and the aluminum oxide phase to be obtained. Relative to 100% by volume of the total amount of the first raw material mixture and the aluminum oxide particles, the aluminum oxide particles may be contained in a volume ratio of 3.0% by volume or more, may be contained in a volume ratio of 4.0% by volume or more, and may be contained in a volume ratio of 4.5% by volume or more; and may be contained in a volume ratio of 9.5% by volume or less, may be contained in a volume ratio of 9.0% by volume or less, and may be contained in a volume ratio of 8.5% by volume or less.

The method for producing a sintered body includes molding a mixture obtained by dry mixing. For molding a mixture obtained by dry mixing, known methods such as a press molding method can be adopted. Examples of the press molding method include a die press molding method and a cold isostatic pressing (CIP) method for which the term is defined in No. 2109 of JIS Z2500:2000. Alternatively, it may be molded by uniaxial compression. Two types of molding methods may be adopted to shape the molded body. For example, CIP may be performed after die press molding, or CIP may be performed after uniaxial compression by a roller bench method. For CIP, the molded body is preferably pressed by a cold isostatic pressing method using water as the medium.

The pressure in die press molding or in molding by uniaxial compression is preferably in a range of 5 MPa or more and 50 MPa or less, and more preferably in a range of 5 MPa or more and 30 MPa or less. When the pressure in die press molding or in molding by uniaxial compression falls within the above range, the molded body can be formed into a desired shape.

The pressure in CIP is preferably in a range of 50 MPa or more and 200 MPa or less, and more preferably in a range of 50 MPa or more and 180 MPa or less. When the pressure in CIP falls within the range of 50 MPa or more and 200 MPa or less, a sintered body including crystal agglomerated particles containing a rare earth aluminate fluorescent material crystal phase, and an aluminum oxide phase disposed around the crystal agglomerated particles can be obtained.

The molded body obtained by molding the mixture may be heated to remove and degrease dispersants. When heating and degreasing the molded body, the molded body is preferably heated at a temperature in a range of 500°C or higher and 1,000°C or lower in an atmosphere of air and nitrogen. By heating the molded body at a temperature in the range of 500°C or higher and 1,000°C or lower in an atmosphere of air and nitrogen, the amount of carbon contained in the molded body is reduced, and a decrease in luminous flux due to carbon inclusion can be suppressed.

The method for producing a sintered body includes calcining the molded body obtained by molding. In calcining the molded body, the calcining temperature (temperature in the calcining furnace) is preferably in a range of 1,300°C or higher and 1,800°C or lower, more preferably in a range of 1,400°C or higher and 1,790°C or lower, even more preferably in a range of 1,450°C or higher and 1,780°C or lower, may be in a range of 1,500°C or higher and 1,700°C or lower, and may be in a range of 1,550°C or higher and 1,650°C or lower. When the calcining temperature is 1,300°C or higher in calcining the molded body, a sintered body including crystal agglomerated particles containing a rare earth aluminate fluorescent material crystal phase, and an aluminum oxide phase disposed around the crystal agglomerated particles can be obtained. When the calcining temperature is 1,800°C or lower in calcining the molded body, a sintered body can be obtained in which grain boundaries of each crystal phase can be distinguished, without being dissolved and eliminated, by including voids dispersed around each crystal phase in the cross section of the sintered body.

The molded body is preferably calcined under an oxygen-containing atmosphere. The oxygen content in the atmosphere is preferably 5% by volume or more, more preferably 10% by volume or more, and even more preferably 15% by volume or more. The molded body may be calcined under an air atmosphere (oxygen content of 20% by volume or more). In an atmosphere with an oxygen content of less than 1% by volume, it may be difficult to dissolve the surface of oxides, difficult to form crystal agglomerated particles containing a rare earth aluminate fluorescent material crystal phase, and difficult to arrange an aluminum oxide phase around the crystal agglomerated particles. The amount of oxygen in the atmosphere may be measured, for example, by the amount of oxygen flowing into the calcining apparatus, and may be measured at a temperature of 20°C and atmospheric pressure (101.325 kPa). The pressure in calcining the molded body may be atmospheric pressure (101.325 kPa).

The resulting sintered body may be annealed in a reducing atmosphere. By annealing the resulting sintered body in a reducing atmosphere, cerium, which is an oxidized activation element contained in the rare earth aluminate fluorescent material crystal phase in the sintered body, is reduced, and a decrease in wavelength conversion efficiency and a decrease in luminous efficiency can be suppressed in each crystal phase. The reducing atmosphere may be an atmosphere containing at least one rare gas selected from the group consisting of helium, neon, and argon, or a nitrogen gas, and a hydrogen gas or a carbon monoxide gas, and the atmosphere preferably contains at least argon or a nitrogen gas, and a hydrogen gas or a carbon monoxide gas. The annealing may be performed after processing.

The annealing temperature is lower than the calcining temperature, preferably in a range of 1,000°C or higher and 1,600°C or lower. The annealing temperature is more preferably in a range of 1,100°C or higher and 1,400°C or lower. When the annealing temperature is lower than the calcining temperature and falls within the range of 1,000°C or higher and 1,600°C or lower, cerium, which is an oxidized activation element contained in the rare earth aluminate fluorescent material crystal phase in the sintered body, is reduced without reducing the voids in the sintered body, and a decrease in wavelength conversion efficiency and a decrease in luminous flux can be suppressed.

The resulting sintered body may be processed by cutting into a desired size or thickness. Known methods can be used for the cutting method, and examples thereof include blade dicing, laser dicing, and cutting methods using a wire saw.

The resulting sintered body may be surface-treated. Surface treatment is performed on the surface of a cut product obtained by cutting the resulting sintered body. With the surface treatment, the surface of the sintered body can be brought into a suitable state for improving the light extraction efficiency, and the sintered body can be formed into a desired shape, size, or thickness in combination with the above processing or by the surface treatment alone. The surface treatment may be performed prior to processing of cutting the sintered body to a desired size or thickness, and may be performed after the processing. Examples of the surface treatment method include a sand-blasting method, a mechanical grinding method, a dicing method, and a chemical etching method.

With the production method described above, a sintered body including crystal agglomerated particles containing a rare earth aluminate fluorescent material crystal phase, and an aluminum oxide phase, in which the aluminum oxide phase is disposed around the crystal agglomerated particles, can be obtained. The rare earth aluminate fluorescent material crystal phase contained in the sintered body obtained by the production method described above preferably has a composition represented by the formula (I).

The resulting sintered body can be used as a wavelength conversion member by being combined with a light source, in light emitting devices such as light sources for projectors.

A light emitting device using the aforementioned sintered body as a wavelength conversion member will be described. The light emitting device includes the sintered body and an excitation light source.

The excitation light source is preferably a semiconductor light emitting element composed of an LED chip or an LD chip. The semiconductor light emitting element can use a nitride-based semiconductor. By using a semiconductor light emitting element as the excitation light source, a stable light emitting device having high efficiency, high output linearity with respect to the input, and high resistance to mechanical shock can be obtained. The sintered body converts the wavelength of light emitted from the semiconductor light emitting element, which allows a light emitting device capable of emitting wavelength-converted mixed color light to be constituted. The semiconductor light emitting element preferably emits light in a wavelength range of, for example, 350 nm or more and 500 nm or less. The sintered body preferably converts the wavelength of excitation light emitted from the semiconductor light emitting element to emit light having a light emission peak wavelength in a range of 500 nm or more and less than 650 nm.

The light emitting element is more preferably a laser diode. Excitation light emitted from a laser diode serving as the excitation light source is incident on the wavelength conversion member; light having a wavelength converted by the fluorescent material contained in the ceramic composite of the wavelength conversion member is converged and separated into red light, green light, and blue light by plural optical systems such as a lens array, a deflection conversion element, and a color separation optical system; and the lights may be modulated according to image information to thereby form color image lights. Excitation light emitted from a laser diode serving as the excitation light source may also be incident on the wavelength conversion member through an optical system such as a dichroic mirror or a collimating optical system.

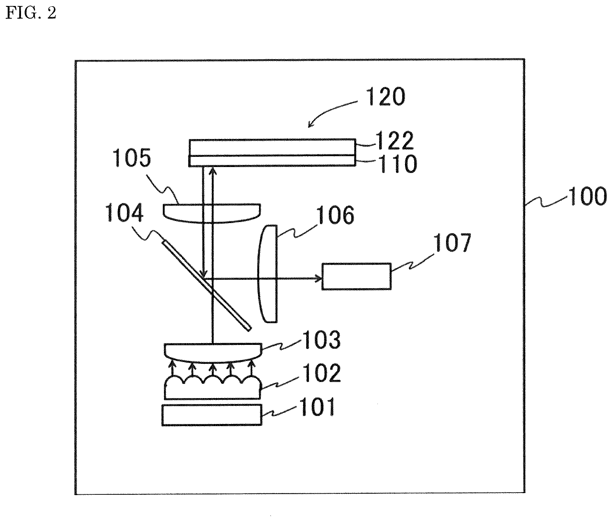

FIG. 2 shows a schematic diagram illustrating a configuration of an exemplary light emitting device 100. Arrows in FIG. 2 schematically represent optical paths of light. The light emitting device 100 preferably includes an excitation light source 101 serving as a light emitting element, a collimating lens 102, three condenser lenses 103, 105, and 106, a dichroic mirror 104, a rod integrator 107, and a wavelength conversion device 120 including a wavelength conversion member. The excitation light source 101 preferably uses a laser diode. The excitation light source 101 may use a plurality of laser diodes, or one in which a plurality of laser diodes are disposed in an array or matrix. The collimating lens 102 may be a collimating lens array in which a plurality of collimating lenses are disposed in an array. Laser light emitted from the excitation light source 101 is converted into substantially parallel light by the collimating lens 102, converged by the condenser lens 103, passed through the dichroic mirror 104, and further converged by the condenser lens 105. The laser light converged by the condenser lens 105 is wavelength-converted by the wavelength conversion device 120 including a wavelength conversion member 110 and a light reflection plate 122, and light having a light emission peak wavelength in a desired wavelength range is emitted from the wavelength conversion member 110 side of the wavelength conversion device 120. The wavelength-converted light emitted from the wavelength conversion device 120 is converged by the condenser lens 106, and is incident on the rod integrator 107, thereby emitting light having an illuminance distribution with improved uniformity in a region to be illuminated, from the light emitting device 100.

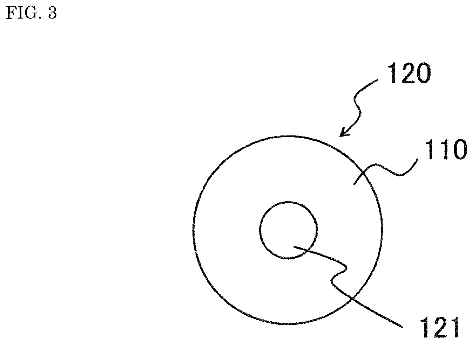

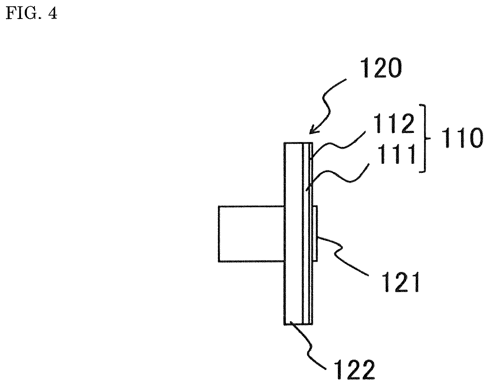

FIG. 3 shows a schematic diagram illustrating a planar configuration of an exemplary wavelength conversion device 120. FIG. 4 shows a lateral side view of the wavelength conversion device 120 as one of the members constituting a light emitting device 100. The wavelength conversion device 120 includes at least a wavelength conversion member 110. The wavelength conversion device 120 includes a disk-shaped wavelength conversion member 110, and may include a rotation mechanism 121 for rotating the wavelength conversion member 110. The rotation mechanism 121 can be connected to a drive mechanism such as a motor, to radiate heat by rotating the wavelength conversion member 110.

FIG. 4 shows a schematic diagram showing a lateral side view configuration of an exemplary wavelength conversion device 120, which illustrates the details of the wavelength conversion device 120 shown in lateral side view as one of the members constituting a light emitting device 100 in FIG. 2. The wavelength conversion device 120 includes a sintered body 111 and a light-transmissive thin film 112, serving as a wavelength conversion member 110. The wavelength conversion device 120 includes a light reflection plate 122 on a side opposite to the side where the light-transmissive thin film 112 is disposed. If the light emitted from the sintered body 111 can be sufficiently emitted to the side where the light-transmissive thin film 112 is disposed, the light reflection plate 122 can be omitted. The light reflection plate 122 may be used not only as a member for reflecting the light emitted from the sintered body 111 to the side where the light-transmissive thin film 112 is disposed, but also as a heat radiation member for transmitting and radiating the heat generated in the sintered body 111 to the outside.

Embodiments according to the present disclosure include the following sintered body and method for producing the same.

[Aspect 1]

A sintered body comprising crystal agglomerated particles containing a rare earth aluminate fluorescent material crystal phase, and an aluminum oxide phase, wherein the aluminum oxide phase is disposed around the crystal agglomerated particles.

[Aspect 2]

The sintered body according to Aspect 1, comprising two or more of the crystal agglomerated particles in one cross-sectional view, wherein the aluminum oxide phase is disposed between two or more of the crystal agglomerated particles.

[Aspect 3]

The sintered body according to Aspect 1 or 2, comprising an aluminum oxide phase having a maximum length of 1.0 $\mu$m or more on a surface or a cross section of the sintered body.

[Aspect 4]

The sintered body according to any one of aspects 1 to 3, comprising an aluminum oxide phase on a surface or a cross section of the sintered body in a range of 2.5 area% or more and 10.0 area% or less relative to 100 area% of the surface or the cross section.

[Aspect 5]

The sintered body according to any one of aspect 4, wherein a measurement range area on the surface or the cross section of the sintered body is preferably an area of 48,387 $\mu$m$^2$ in a scanning electron microscope (SEM) micrograph measured using a SEM.

[Aspect 6]

The sintered body according to any one of aspects 1 to 5, wherein the crystal agglomerated particles have a maximum length in a range of 10.0 $\mu$m or more and 150.0 $\mu$m or less on a surface or a cross section of the sintered body.

[Aspect 7]

The sintered body according to any one of aspect 6, wherein a measurement range area on the surface or the cross section of the sintered body is preferably an area of 48,387 $\mu m^2$ in a scanning electron microscope (SEM) micrograph measured using a SEM.

[Aspect 8]

The sintered body according to any one of aspects 1 to 7, wherein the aluminum oxide phase has a volume ratio in a range of 2.5% by volume or more and 10.0% by volume or less relative to 100% by volume of the total of the crystal agglomerated particles and the aluminum oxide phase.

[Aspect 9]

The sintered body according to any one of aspects 1 to 8, wherein the rare earth aluminate fluorescent material crystal phase comprises at least one element selected from the group consisting of Y, La, Lu, Gd, and Tb.

[Aspect 10]

The sintered body according to any one of aspects 1 to 9, wherein the rare earth aluminate fluorescent material crystal phase has a composition represented by the following formula (I):

$$(R^1_{1-n}Ce_n)_3(Al_{1-m}M^1_m)_{5k}O_{12} \qquad (I)$$

wherein $R^1$ represents at least one element selected from the group consisting of Y, La, Lu, Gd, and Tb; $M^1$ represents at least one element selected from the group consisting of Ga and Sc; and m, n, and k respectively satisfy $0 \leq m \leq 0.02$, $0.001 \leq n \leq 0.017$, and $0.95 \leq k \leq 1.10$.

[Aspect 11]

A method for producing a sintered body comprising:

providing a first raw material mixture obtained by wet mixing raw materials and then drying;
dry mixing the first raw material mixture and aluminum oxide particles; molding a mixture obtained by dry mixing the first raw material mixture and the aluminum oxide particles; and
calcining a molded body obtained by molding the mixture.

[Aspect 12]

The method for producing a sintered body according to aspect 11, wherein the first raw material mixture is provided to comprise first oxide particles containing at least one element $R^1$ selected from the group consisting of Y, La, Lu, Gd, and Tb, second oxide particles containing Ce, third oxide particles containing Al, optionally fourth oxide particles containing at least one element $M^1$ selected from the group consisting of Ga and Sc, and optionally rare earth aluminate fluorescent material particles.

[Aspect 13]

The method for producing a sintered body according to aspect 11 or 12, wherein the aluminum oxide particles to be dry-mixed with the first raw material mixture have a BET specific surface area in a range of 1.0 $m^2$/g or more and 10.0 $m^2$/g or less.

[Aspect 14]

The method for producing a sintered body according to any one of aspects 11 to 13, wherein the aluminum oxide particles have a BET specific surface area smaller than that of the third oxide particles containing Al.

[Aspect 15]

The method for producing a sintered body according to any one of aspects 11 to 14, wherein the third oxide particles containing Al have a BET specific surface area in a range of more than 10.0 m$^2$/g and 15.0 m$^2$/g or less.

[Aspect 16]

The method for producing a sintered body according to any one of aspects 11 to 15, wherein the aluminum oxide particles are contained in a range of 2.5% by volume or more and 10.0% by volume or less relative to 100% by volume of the total amount of the first raw material mixture and the aluminum oxide particles.

[Aspect 17]

The method for producing a sintered body according to any one of aspects 11 to 16, wherein the molded body is calcined at a calcining temperature in a range of 1,300°C or higher and 1,800°C or lower.

EXAMPLES

The present disclosure is hereunder specifically described by reference to the following Examples. The present disclosure is not limited to the following Examples.
Lutetium oxide particles having a lutetium oxide purity of 99% by mass and a BET specific surface area of 12.2 m$^2$/g were used as the first oxide particles.
Cerium oxide particles having a cerium oxide purity of 92% by mass and a BET specific surface area of 124.9 m$^2$/g were used as the second oxide particles.
Aluminum oxide particles (first aluminum oxide particles) having an aluminum oxide purity of 99% by mass and a BET specific surface area of 12.2 m$^2$/g were used as the third oxide particles.

Example 1

Lutetium oxide particles as the first oxide particles, cerium oxide particles as the second oxide particles, and aluminum oxide particles (first aluminum oxide particles) as the third oxide particles were weighed such that the molar ratios of the elements Lu, Al, and Ce contained in each of the oxide particles had a composition represented by $Lu_{2.987}Ce_{0.013}Al_5O_{12}$. A dispersant (FLOWLEN G-700, manufactured by Kyoeisha Chemical Co., Ltd.) in an amount of 4.0 parts by mass was added to 100 parts by mass of the total amount of the first oxide particles, the second oxide particles, and the third oxide particles; 50 parts by mass of ethanol was further added thereto; and the materials were wet-mixed using a ball mill, dried at 130°C for 10 hours, and then dry-pulverized and mixed using a ball mill to provide a first raw material mixture.
Second aluminum oxide particles having an aluminum oxide purity of 99% by mass or more and a BET specific surface area of 5.3 m$^2$/g were used as the aluminum oxide particles (second aluminum oxide particles) to be dry-mixed with the first raw material mixture.
The second aluminum oxide particles were added such that the amount (% by volume) of the second aluminum oxide particles relative to 100% by volume of the total amount of the first raw material mixture and the aluminum oxide particles (second aluminum oxide particles) was as shown in Table 1. The first raw material mixture and the second aluminum oxide particles were dry-mixed for 15 minutes using a ball mill.
The resulting mixture was filled in a die to form a cylindrical molded body having a diameter of 26 mm and a thickness of 8 mm at a pressure of 5 MPa (51 kgf/cm$^2$). The resulting cylindrical molded body was placed in a package container and vacuum-packed, and then subjected to cold isostatic pressing (CIP) at 176 MPa using a CIP apparatus (manufactured by Kobe Steel, Ltd. (KOBELCO)) to obtain a molded body. The resulting molded body was thermal-degreased at 700°C in a nitrogen atmosphere.
The molded body obtained by molding was calcined using a calcining furnace (manufactured by Marusho Denki Co., Ltd.) to obtain a sintered body. The calcination was performed under the conditions of an air atmosphere (101.325 kPa, oxygen concentration of approximately 20% by volume), a temperature of 1,560°C, and a calcination time of 6 hours. The resulting sintered body was cut into an appropriate shape and size using a wire saw, and the surface of the cut product was polished using a surface grinder. Finally, a sintered body according to Example 1 having a plate thickness of 230 μm was obtained. The sintered body according to Example 1 included crystal agglomerated particles containing a rare earth aluminate fluorescent material crystal phase having a composition represented by $Lu_{2.987}Ce_{0.013}Al_5O_{12}$, and an aluminum oxide phase having a maximum length of 1.0 μm or more on the surface or the cross section of the sintered body. The aluminum oxide phase was disposed around the crystal agglomerated particles.

Example 2

A sintered body according to Example 2 was obtained in the same or similar manner as in Example 1, except that the second aluminum oxide particles were added such that the amount (% by volume) of the second aluminum oxide particles relative to 100% by volume of the total of the first raw material mixture and the aluminum oxide particles (second aluminum oxide particles) was as shown in Table 1. The sintered body according to Example 2 included crystal agglomerated particles containing a rare earth aluminate fluorescent material crystal phase having a composition represented by $Lu_{2.987}Ce_{0.013}Al_5O_{12}$, and an aluminum oxide phase having a maximum length of 1.0 $\mu$m or more on the surface or the cross section of the sintered body. The aluminum oxide phase was disposed around the crystal agglomerated particles.

Comparative Example 1

A sintered body according to Comparative Example 1 was obtained in the same or similar manner as in Example 1, except that only the first raw material mixture was used as a mixture without dry-mixing the aluminum oxide particles (second aluminum oxide particles) with the first raw material mixture. In the sintered body according to Comparative Example 1, no crystal agglomerated particles were observed, and the aluminum oxide phase was scattered throughout.

Comparative Example 2

A sintered body according to Comparative Example 2 was obtained in the same or similar manner as in Example 1, except that only the first raw material mixture was used as a mixture without dry-mixing the aluminum oxide particles (second aluminum oxide particles) with the first raw material mixture, and the temperature for calcining the molded body was 1,540°C. In the sintered body according to Comparative Example 2, no crystal agglomerated particles were observed, and the aluminum oxide phase was scattered throughout.

Comparative Example 3

The second aluminum oxide particles were added such that the amount (% by volume) of the second aluminum oxide particles relative to 100% by volume of the total of the first raw material mixture and the aluminum oxide particles (second aluminum oxide particles) was as shown in Table 1. A dispersant (FLOWLEN G-700, manufactured by Kyoeisha Chemical Co., Ltd.) in an amount of 4.0 parts by mass was added to 100 parts by mass of the total amount of the first raw material mixture and the second aluminum oxide particles; 50 parts by mass of ethanol was further added thereto; and the materials were wet-mixed using a ball mill, dried at 130°C for 10 hours, and then dry-pulverized and mixed using a ball mill to provide a mixture. A sintered body according to Comparative Example 3 was obtained in the same or similar manner as in Example 1, except that the molded body obtained by molding the resulting mixture was calcined at a calcining temperature of 1,540°C. In the sintered body according to Comparative Example 3, no crystal agglomerated particles were observed, and the aluminum oxide phase was scattered throughout.

Comparative Example 4

A sintered body according to Comparative Example 4 was obtained in the same or similar manner as in Comparative Example 3, except that the second aluminum oxide particles were added such that the amount (% by volume) of the second aluminum oxide particles relative to 100% by volume of the total of the first raw material mixture and the aluminum oxide particles (second aluminum oxide particles) was as shown in Table 1. In the sintered body according to Comparative Example 4, no crystal agglomerated particles were observed, and the aluminum oxide phase was scattered throughout.

The sintered bodies were evaluated as follows. The results are shown in Table 1. In Table 1, the symbol "-" indicates that there is no corresponding item or numerical value.

Relative Density

The relative density of the sintered body according to each of Examples and Comparative Examples was measured. The relative density of the sintered body according to each of Examples and Comparative Examples was calculated by the above formula (1). The apparent density of the sintered body was calculated by the above formula (2). The true density of the sintered body was calculated by the above formula (3). The true density of the rare earth aluminate fluorescent material was 6.69 g/cm$^3$, and the true density of the aluminum oxide particles was 3.98 g/cm$^3$.

Transmittance (%)

The transmittance was determined as follows using a spectrophotometer (Hitachi High-Tech Science Corp.): the light emitted from the light source was converted into monochromatic light having a wavelength of 550 nm using the spectrometer; the light intensity of the converted light having a wavelength of 550 nm was measured to obtain an incident light intensity; the light having a wavelength of 550 nm was incident on the sintered body according to each of Examples and Comparative Examples; the light intensity of the light emitted from the sintered body on the side opposite to the incident side was measured to obtain a transmitted light intensity; and the ratio of the transmitted light intensity to the incident light intensity was determined as a transmittance of the light having a wavelength of 550 nm, based on the following formula (4). In the formula (4), $I_0$ represents the incident light intensity, and I represents the transmitted light intensity at each wavelength.

$$Transmittance\ (\%) = I/I_0 \times 100 \qquad (4)$$

Relative Luminous Flux (%)

The sintered body according to each of Examples and Comparative Examples was irradiated with a laser light having a wavelength of 450 nm emitted from a laser diode such that the light diameter of the incident light was 1.0 mm, and the radiant flux of the light emitted from the same surface as that on which the laser light was incident was measured using an integral sphere. The radiant flux in Comparative Example 1 was defined as 100%, and the radiant flux obtained by measuring the sintered body according to each of Examples 1 to 2 and Comparative Examples 2 to 4 relative to the radiant flux in Comparative Example 1 was expressed as a relative luminous flux (%).

Light Diameter Ratio (Light Diameter of Emitting Light/Light Diameter of Incident Light)

The sintered body according to each of Examples and Comparative Examples was irradiated with a laser light having a wavelength of 450 nm emitted from a laser diode such that the light diameter of the incident light was 0.6 mm on the first main surface on which the laser light was incident, and the light diameter of the laser light was defined as the light diameter of the incident light incident on the first main surface of the sintered body. The light diameter of the light emitted from the same surface as the first main surface on which the laser light was incident was determined as follows: light emission luminance of the light emitted from the sintered body according to each of Examples and Comparative Examples was measured using a color luminance meter; a position exhibiting the maximum luminance in the obtained light emission spectrum was defined as a center (measuring center); distances (mm) of two positions in the light emission spectrum where the luminance was 10/100 of the maximum luminance (10/100 luminance) from the measuring center were measured in terms of absolute values; and the sum of the absolute values of the distances (mm) of the two positions in the light emission spectrum where the luminance was 10/100 of the maximum luminance from the measuring center was determined as the light diameter of the emitting light emitted from the first main surface. The light diameter ratio of the light diameter of the light emitted from the first main surface to the light diameter of the light incident on the same surface as the first main surface was determined. The light diameter ratio in Comparative Example 1 was defined as 100%, and the light diameter ratio obtained by measuring the sintered body according to each of Examples 1 to 2 and Comparative Examples 2 to 4 relative to the light diameter ratio in Comparative Example 1 was expressed as a relative light diameter ratio (%).

Illumination Efficiency (%)

The smaller the light diameter ratio, the narrower the light is emitted (point light source). Therefore, when an optical system using a sintered body as a wavelength conversion member is a primary optical system and another secondary optical system is present, the light emitted from the primary optical system easily enters the secondary optical system, thereby increasing the illumination efficiency. The illumination efficiency (illumination efficiency = illumination output $\times$ 100 / fluorescence output) that can be measured using a typical actual secondary optical system (such as a rod integrator) can be approximated by the following formula (5) using the relative light diameter ratio value described above.

$$Illumination\ efficiency\ (\%) = -0.001633x^2 + 0.145x + 58.783$$
$$(x\ represents\ the\ relative\ light\ diameter\ ratio) \qquad (5)$$

Light Extraction Efficiency (%)

For the sintered body according to each of Examples and Comparative Examples, the product of the measured relative luminous flux and the illumination efficiency was calculated as the light extraction efficiency. The light extraction efficiency in Comparative Example 1 was defined as 100%, and the light extraction efficiency of the sintered body according to each of Examples 1 to 2 and Comparative Examples 2 to 4 relative to the light extraction efficiency in Comparative Example 1 was expressed as a relative light extraction efficiency (%).

SEM Micrograph

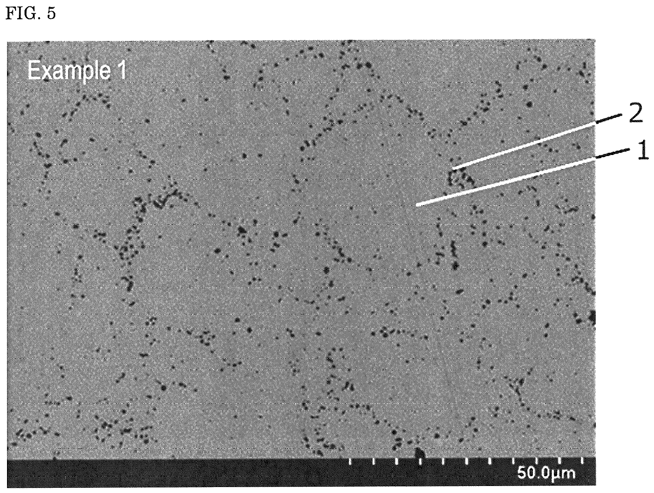

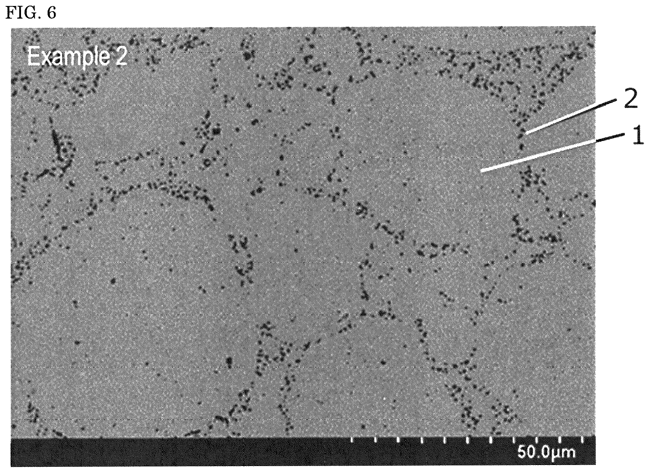

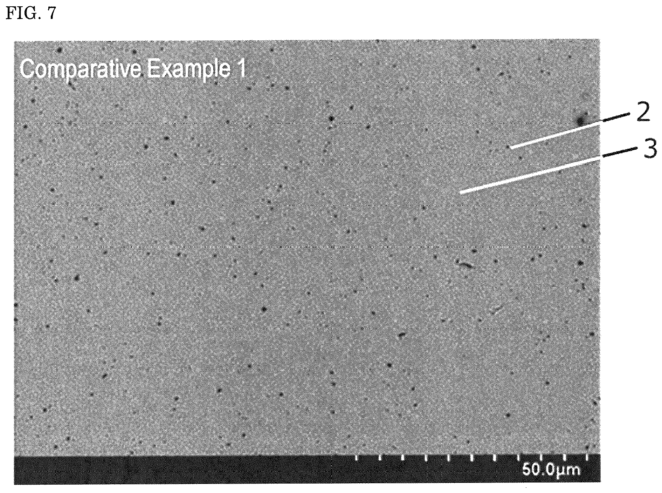

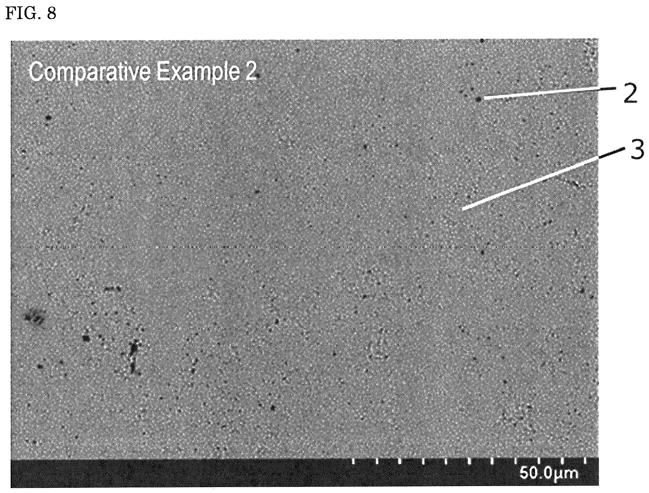

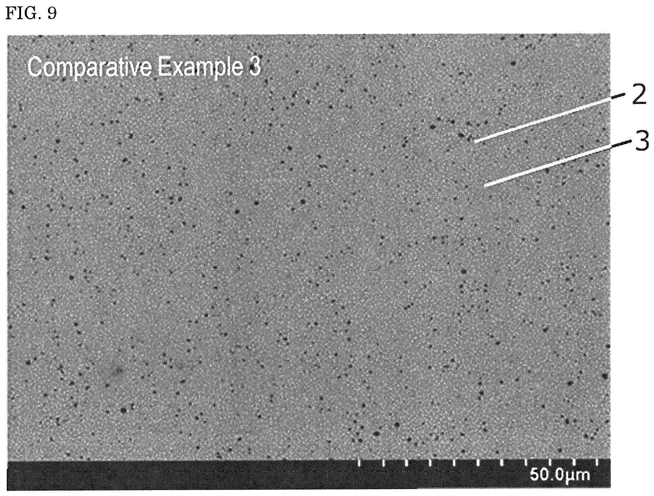

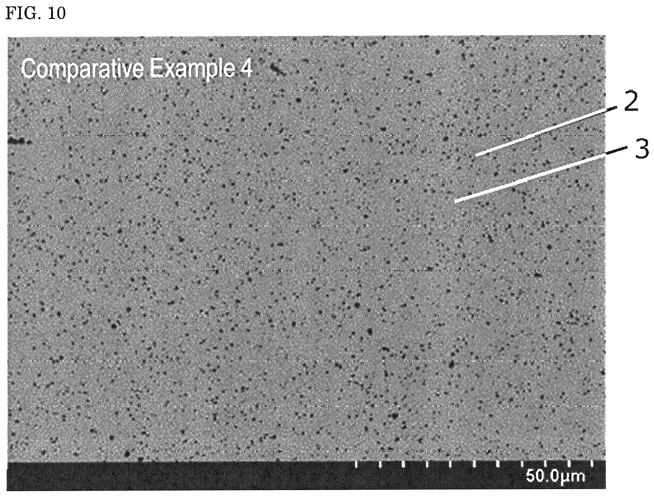

A scanning electron microscope (SEM) was used to obtain SEM micrographs of the surfaces of the sintered bodies according to Examples and Comparative Examples. The SEM micrographs shown in FIGS. were micrographs obtained at a magnification of 1,000 times, and the SEM micrographs used for measuring the maximum length were micrographs obtained at a magnification of 500 times in consideration of the accuracy of the analysis. FIG. 5 shows an SEM micrograph of the surface of the sintered body according to Example 1. FIG. 6 shows an SEM micrograph of the surface of the sintered body according to Example 2. FIG. 7 shows an SEM micrograph of the surface of the sintered body according to Comparative Example 1. FIG. 8 shows an SEM micrograph of the surface of the sintered body according to Comparative Example 2. FIG. 9 shows an SEM micrograph of the surface of the sintered body according to Comparative Example 3. FIG. 10 shows an SEM micrograph of the surface of the sintered body according to Comparative Example 4.

Area Ratio of Aluminum Oxide Phase

In the SEM micrographs obtained by photographing the surface or the cross section of the sintered body according to each of Examples and Comparative Examples using an SEM, the total area of the aluminum oxide phase was measured using a Winroof 2018 image analysis software device (manufactured by Mitani Corp.), and the area ratio was calculated when the measurement area on the surface or the cross section of the sintered body was 100 area%. The measurement area on the surface or the cross section of the sintered body means the same as the 100 area% of the total of the crystal agglomerated particles and the aluminum oxide phase. The sintered body also has a similar aluminum oxide phase present in the thickness direction, and thus the volume ratio of the aluminum oxide phase in the sintered body is approximately the same value as the area ratio of the aluminum oxide phase in the sintered body.

Maximum Length Measurement Method

In the SEM micrographs obtained by photographing the surface or the cross section of the sintered body according to each of Examples and Comparative Examples using an SEM, the region having an area of 48,387 $\mu m^2$ was defined as a measurement range. Here, the data size of each SEM micrograph was $480 \times 640$ (vertical $\times$ lateral) pixels and one pixel was 0.396875 $\mu m$, and the area of the measurement range was thus calculated as 190.5 $\mu m \times$ 254.0 $\mu m$, resulting in 48,387 $\mu m^2$. A secondary agglomerated particle of a rare earth aluminate fluorescent material crystal phase included in the measurement range was defined as a crystal agglomerated particle, and the distance between the two most distant points on the outline of the crystal aggregate particle was measured as the long diameter of the crystal agglomerated particle using a Winroof 2018 image analysis software device (manufactured by Mitani Corp.). In addition, the distance between the two most distant points on the outline of the aluminum oxide phase (black dots on the SEM micrograph) disposed around the crystal aggregate particle was measured as the long diameter of the aluminum oxide phase using the image analysis software device. The long diameters of 10 or more and 1,000 or less crystal agglomerated particles on the measurement area were measured, and the greatest value among the long diameters was defined as the maximum length of the crystal agglomerated particles on the surface or the cross section of each sintered body. In the aluminum oxide phase disposed around the crystal agglomerated particles on the measurement area, the greatest value among the long diameters of the aluminum oxide phase was defined as the maximum length of the aluminum oxide phase, and the presence or absence of an aluminum oxide phase having a maximum length of 1.0 um or more was confirmed.

Table 1

Table 1

| | Mixing method | Content of second aluminum oxide particles (% by volume) | Calcining temperature (°C) | Relative density (%) | Transmittance (%) | Relative luminous flux (%) | Relative light diameter ratio (%) | Illumination efficiency (%) | Relative light extraction efficiency (%) | Presence or absence of aluminum oxide phase with absolute maximum length of $1.0\ \mu m$ or more | Area ratio of aluminum oxide phase (area%) | Absolute maximum length of crystal agglomerated particles (Nm) |
|---|---|---|---|---|---|---|---|---|---|---|---|---|
| Example 1 | Dry | 2.9 | 1560 | 98.2 | 37.7 | 102.1 | 100.8 | 56.8 | 101.8 | presence | 3.2 | 80.5 |
| Example 2 | | 4.8 | | 98.3 | 37.8 | 106.1 | 100.0 | 57.0 | 106.1 | presence | 4.0 | 84.5 |
| Comparative Example 1 | - | - | 1560 | 98.8 | 37.5 | 100.0 | 100.0 | 57.0 | 100.0 | absence | 0.7 | - |
| Comparative Example 2 | - | - | 1540 | 95.8 | 24.4 | 94.3 | 81.7 | 59.7 | 98.9 | absence | 0.5 | - |
| Comparative Example 3 | Wet | 2.9 | 1540 | 98.3 | 34.2 | 95.1 | 94.5 | 57.9 | 96.7 | absence | 1.6 | - |
| Comparative Example 4 | | 4.8 | | 98.3 | 37.8 | 97.5 | 102.5 | 56.5 | 96.7 | absence | 4.5 | - |

The sintered bodies according to Examples 1 and 2 each had a higher relative luminous flux than that of Comparative Example 1 while maintaining an good relative light diameter ratio and good illumination efficiency. The sintered bodies according to Examples 1 and 2 also each had a higher relative light extraction efficiency than that of Comparative Example 1. In the sintered bodies according to Examples 1 and 2, the aluminum oxide phase was disposed around the crystal agglomerated particles containing the fluorescent material crystal phase, so that the heat generated when the rare earth aluminate fluorescent material crystal phase absorbed the excitation light incident on the sintered body and emitted light was efficiently radiated by the aluminum oxide phase having a thermal conductivity higher than that of the rare earth aluminate fluorescent material crystal phase. In the sintered bodies according to Examples 1 and 2, the decrease in luminous energy due to the heat when the rare earth aluminate fluorescent material crystal phase emitted light could be suppressed, and the luminous flux emitted from the sintered bodies could be increased. The sintered bodies according to Examples 1 and 2 had an aluminum oxide phase having a maximum length of 1.0 $\mu$m present around the crystal agglomerated particles, and the area ratio of the aluminum oxide phase in the measurement area on the surface or the cross section of the sintered bodies was in the range of 2.5 area% or more and 10.0 area% or less. From the results, the volume ratio of the aluminum oxide phase was in the range of 2.5% by volume or more and 10.0% by volume or less relative to 100% by volume of the total of the crystal agglomerated particles and the aluminum oxide phase in the sintered bodies.

The sintered bodies according to Comparative Examples 2 to 4 each had a lower relative luminous flux than that of the sintered body according to Comparative Example 1. The sintered body according to Comparative Examples 2 had a lower calcining temperature, a lower relative density than that of the sintered body according to Comparative Example 1, and an increased void ratio. Thus, it was presumed that the heat generated when the rare earth aluminate fluorescent material crystal phase emitted light was not efficiently radiated and the luminous flux was lower than that of Comparative Example 1. The sintered bodies according to Comparative Examples 3 and 4 included an aluminum oxide phase, but the aluminum oxide phase was not disposed around the crystal agglomerated particles. Thus, the heat generated when the rare earth aluminate fluorescent material crystal phase emitted light was not efficiently radiated, the decrease in luminous energy due to the heat was not suppressed, and the relative luminous flux was lower than that of Comparative Example 1.

FIG. 5 shows an SEM micrograph of the surface of the sintered body according to Example 1; and FIG. 6 shows an SEM micrograph of the surface of the sintered body according to Example 2. In the sintered bodies according to Examples 1 and 2, the aluminum oxide phase 2, which appeared black on the SEM micrograph, disposed around the crystal agglomerated particles 1 containing the rare earth aluminate fluorescent material crystal phase was observed on the surface of the sintered bodies.

FIG. 7 shows an SEM micrograph of the surface of the sintered body according to Comparative Example 1; FIG. 8 shows an SEM micrograph of the surface of the sintered body according to Comparative Example 2; FIG. 9 shows an SEM micrograph of the surface of the sintered body according to Comparative Example 3; and FIG. 10 shows an SEM micrograph of the surface of the sintered body according to Comparative Example 4. In any of the SEM micrographs of FIGS. 7 to 10, no crystal agglomerated particles were observed, nor was it confirmed that the aluminum oxide phase was disposed around the crystal agglomerated particles. In the sintered bodies according to Comparative Examples 1 to 4, the aluminum oxide phase 2 was scattered on the surface of the sintered bodies together with the rare earth aluminate fluorescent material crystal 3.

The sintered body according to the present disclosure can be used, in combination with an excitation light source, as a wavelength conversion member for lighting devices for vehicles and general lighting, backlights for liquid crystal display devices, and light sources for projectors.

**Claims**

1. A sintered body comprising:

   crystal agglomerated particles containing a rare earth aluminate fluorescent material crystal phase; and
   an aluminum oxide phase, wherein
   the aluminum oxide phase is disposed around the crystal agglomerated particles.

2. The sintered body according to claim 1, wherein

   the sintered body includes two or more of the crystal agglomerated particles in a cross-sectional view, and
   the aluminum oxide phase is disposed between the two or more of the crystal agglomerated particles.

3. The sintered body according to claim 1 or 2, wherein the aluminum oxide phase has a maximum length that is 1.0

μm or more on a surface or a cross section of the sintered body.

4.  The sintered body according to any one of claims 1 to 3, wherein the aluminum oxide phase on a surface or a cross section of the sintered body is in a range of 2.5 area% or more and 10.0 area% or less relative to 100 area% of the surface or the cross section.

5.  The sintered body according to any one of claims 1 to 4, wherein the crystal agglomerated particles have a maximum length in a range of 10.0 μm or more and 150.0 μm or less on a surface or a cross section of the sintered body.

6.  The sintered body according to any one of claims 1 to 5, wherein the aluminum oxide phase has a volume ratio in a range of 2.5% by volume or more and 10.0% by volume or less relative to 100% by volume of a total of the crystal agglomerated particles and the aluminum oxide phase.

7.  The sintered body according to any one of claims 1 to 6, wherein the rare earth aluminate fluorescent material crystal phase comprises at least one element selected from the group consisting of Y, La, Lu, Gd, and Tb.

8.  The sintered body according to any one of claims 1 to 7, wherein the rare earth aluminate fluorescent material crystal phase has a composition represented by the following formula (I):

$$(R^1{}_{1-n}Ce_n)_3(Al_{1-m}M^1{}_m)_{5k}O_{12} \qquad (I)$$

wherein $R^1$ represents at least one element selected from the group consisting of Y, La, Lu, Gd, and Tb; $M^1$ represents at least one element selected from the group consisting of Ga and Sc; and m, n, and k respectively satisfy $0 \leq m \leq 0.02$, $0.001 \leq n \leq 0.017$, and $0.95 \leq k \leq 1.10$.

9.  A method for producing a sintered body comprising:

    (a) providing a first mixture obtained by wet mixing raw materials and then drying;
    (b) dry mixing the first mixture and aluminum oxide particles to obtain a second mixture;
    (c) molding the second mixture obtained in (b) to obtain a molded body; and
    (d) calcining the molded body obtained in (c).

10. The method for producing a sintered body according to claim 9, wherein the first mixture comprises first oxide particles containing at least one element $R^1$ selected from the group consisting of Y, La, Lu, Gd, and Tb, second oxide particles containing Ce, third oxide particles containing Al, optionally fourth oxide particles containing at least one element $M^1$ selected from the group consisting of Ga and Sc, and optionally rare earth aluminate fluorescent material particles.

11. The method for producing a sintered body according to claim 9, wherein the aluminum oxide particles to be dry-mixed with the first mixture have a BET specific surface area in a range of 1.0 m²/g or more and 10.0 m²/g or less.

12. The method for producing a sintered body according to claim 9 or 10, wherein the aluminum oxide particles have a BET specific surface area smaller than a BET specific surface area of the third oxide particles containing Al.

13. The method for producing a sintered body according to any one of claims 9 to 11, wherein the third oxide particles containing Al have a BET specific surface area in a range of more than 10.0 m²/g and 15.0 m²/g or less.

14. The method for producing a sintered body according to any one of claims 9 to 13, wherein in (b), an amount of the aluminum oxide particles are in a range of 2.5% by volume or more and 10.0% by volume or less relative to 100% by volume of a total amount of the first mixture and the aluminum oxide particles.

15. The method for producing a sintered body according to any one of claims 9 to 14, wherein the molded body is calcined at a calcining temperature in a range of 1,300°C or higher and 1,800°C or lower.

FIG. 1

```
┌─────────────────────────────────────────────────┐
│                                                 │
│        Preparing First Raw Material Mixture      │  ∿ S101
│                                                 │
└─────────────────────────────────────────────────┘
                         │
                         ▼
┌─────────────────────────────────────────────────┐
│ Dry Mixing First Raw Material Mixture and Aluminum│  ∿ S102
│ Oxide Particles (Second Aluminum Oxide Particles) │
└─────────────────────────────────────────────────┘
                         │
                         ▼
┌─────────────────────────────────────────────────┐
│                                                 │
│                Molding Mixture                   │  ∿ S103
│                                                 │
└─────────────────────────────────────────────────┘
                         │
                         ▼
┌─────────────────────────────────────────────────┐
│                                                 │
│              Calcining Molded Body               │  ∿ S104
│                                                 │
└─────────────────────────────────────────────────┘
```

FIG. 2

FIG. 3

FIG. 4

FIG. 5

FIG. 6

FIG. 7

FIG. 8

FIG. 9

FIG. 10

**EUROPEAN SEARCH REPORT**

Application Number

EP 23 18 8597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 549 923 A1 (NICHIA CORP [JP]) 9 October 2019 (2019-10-09) * examples 1-17 * * paragraph [0091]; figure 3 * * claims 1,5,10, 11, 13 * * paragraph [0061] * | 1-3,5,7, 8 | INV. C04B35/44 |
| X | CN 109 467 453 A (SHANGHAI INST CERAMICS CAS) 15 March 2019 (2019-03-15) * claims 1-4, 8 * * paragraphs [0027] - [0032] * | 1-15 | |
| X | WO 2018/103481 A1 (APPOTRONICS CHINA CORP [CN]) 14 June 2018 (2018-06-14) * claims 1-3, 6, 8, 10 * | 1-7,9, 14,15 | |
| X | WO 2018/223544 A1 (APPOTRONICS CORP LTD [CN]) 13 December 2018 (2018-12-13) * page 4; figures 1, 2 * * examples 1-4 * * claims 1-5 * | 1-3,5,7 | |
| X | CN 109 650 851 A (UNIV SUN YAT SEN; YILI RUIGUANG TECH DEVELOPMENT SHENZHEN CO LTD) 19 April 2019 (2019-04-19) * examples 1,2 * * figures 2A, 2B * * claims 1, 10 * | 1-7 | **TECHNICAL FIELDS SEARCHED (IPC)** C04B |
| X | CN 109 896 852 A (SHANGHAI AVIATION ELECTRIC CO LTD) 18 June 2019 (2019-06-18) * examples 1,2 * * claims 1-4 * | 1-7,9, 10,14,15 | |
| A | US 8 922 111 B2 (NITTO DENKO CORP [JP]) 30 December 2014 (2014-12-30) * examples 1-3 * | 1-15 | |

The present search report has been drawn up for all claims

| Place of search | Date of completion of the search | Examiner |
|---|---|---|
| The Hague | 17 January 2024 | Sow, Eve |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 8597

This annex lists the patent family members relating to the patent documents cited in the above-mentioned European search report.
The members are as contained in the European Patent Office EDP file on
The European Patent Office is in no way liable for these particulars which are merely given for the purpose of information.

17-01-2024

| Patent document cited in search report | | Publication date | Patent family member(s) | | Publication date |
|---|---|---|---|---|---|
| EP 3549923 | A1 | 09-10-2019 | CN 110342908 A | | 18-10-2019 |
| | | | EP 3549923 A1 | | 09-10-2019 |
| | | | US 2019309223 A1 | | 10-10-2019 |
| CN 109467453 | A | 15-03-2019 | CN 109467453 A | | 15-03-2019 |
| | | | WO 2019047822 A1 | | 14-03-2019 |
| WO 2018103481 | A1 | 14-06-2018 | CN 108610023 A | | 02-10-2018 |
| | | | EP 3553041 A1 | | 16-10-2019 |
| | | | US 2020123063 A1 | | 23-04-2020 |
| | | | US 2022135487 A1 | | 05-05-2022 |
| | | | WO 2018103481 A1 | | 14-06-2018 |
| WO 2018223544 | A1 | 13-12-2018 | CN 109020509 A | | 18-12-2018 |
| | | | WO 2018223544 A1 | | 13-12-2018 |
| CN 109650851 | A | 19-04-2019 | NONE | | |
| CN 109896852 | A | 18-06-2019 | NONE | | |
| US 8922111 | B2 | 30-12-2014 | CN 104508082 A | | 08-04-2015 |
| | | | EP 2823017 A1 | | 14-01-2015 |
| | | | JP 6140766 B2 | | 31-05-2017 |
| | | | JP 2015232130 A | | 24-12-2015 |
| | | | JP 2015510954 A | | 13-04-2015 |
| | | | KR 20150023225 A | | 05-03-2015 |
| | | | TW 201336971 A | | 16-09-2013 |
| | | | US 2013234587 A1 | | 12-09-2013 |
| | | | WO 2013134163 A1 | | 12-09-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022133298 A
- JP 2023118270 A
- JP 2017197774 A
- JP 2019218560 A